# EUROPÄISCHE PATENTSCHRIFT

(11) **EP 3 012 149 B1**
(45) Veröffentlichungstag und Bekanntmachung des Hinweises auf die Patenterteilung: **17.04.2019**
(21) Anmeldenummer: 15002945.2
(22) Anmeldetag: 15.10.2015
(51) Int. Cl.: B60P 3/07, B60P 3/12

(54) **FAHRZEUG ZUM TRANSPORTIEREN VON ZUMINDEST EINEM PKW**
VEHICLE FOR TRANSPORTING AT LEAST ONE PASSENGER VEHICLE
VEHICULE DE TRANSPORT D'AU MOINS UN VEHICULE AUTOMOBILE

(30) Priorität: 24.10.2014 DE 102014015690
(43) Veröffentlichungstag der Anmeldung: 27.04.2016
(73) Patentinhaber: Marbach Concepte GmbH & Co. KG, 74078 Heilbronn (DE)
(72) Erfinder: Marbach, Bernd, 74078 Heilbronn (DE)
(74) Vertreter: Schmid, Barbara

(56) Entgegenhaltungen:
- EP-A1- 0 362 096
- EP-A2- 0 449 217
- WO-A1-2010/004615
- US-A1- 2001 033 786
- US-A1- 2008 292 439
- US-A1- 2010 086 386
- "ROLLING SAFE TRAILER, SAFE TRANSPORTATION OF VALUABLE VETERANS AND SPORTS CARS. Ö<<ROLLING SAFE>> POUR LE TRANSPORT DE VOITURES DE VALEUR ET DE COURSE", COMPOSITES.PLASTIQUES RENFORCES FIBRES DE VERRE TEXTILE, CENTRE DOC. VERRE TEXTILE PLAS RE. PARIS, FR, Bd. 33, Nr. 5, 1. September 1993 (1993-09-01), Seite 64, XP000411639, ISSN: 0754-0876

## Beschreibung

### TECHNISCHES GEBIET

Die Erfindung betrifft einen Autotransporter mit Kofferaufbau zum Transportieren von einem Personenkraftwagen (PKW). Derartige Autotransporter werden insbesondere für die Überführung von Sportwagen, von Rennwagen, von Datenkontrollmodellen oder von Sonderschutzfahrzeugen eingesetzt. Durch den Transport des PKW innerhalb des geschlossenen Kofferaufbaus ist der PKW während des Transports nicht sichtbar, so dass maximale Diskretion ermöglicht wird.

### STAND DER TECHNIK

Autotransporter mit Kofferaufbau zum Transportieren von einem PKW sind bekannt. In dem geschlossenen Kofferaufbau ist in der Regel ein Plateau angeordnet, das während der Fahrt innerhalb des Kofferaufbaus angeordnet ist. Auf diesem Plateau ist der zu transportierende PKW geparkt und vorschriftsmäßig gesichert. Das Plateau besitzt zu diesem Zweck eine Reihe von Durchbrüchen, durch die Ladegurte und ähnliche Befestigungselemente geführt werden können.

Um den PKW zu be- und entladen, kann das Plateau aus dem geschlossenen Kofferaufbau ausgefahren werden, bis das hintere Ende des Plateaus auf der Fahrbahn aufliegt. Das vordere Ende des Plateaus ist im Bereich der hinteren Ladeöffnung des Kofferaufbaus auf Höhe der Laderampe befestigt, so dass das Plateau in einer geneigten Position vorhanden ist. Anschließend wird der PKW auf das Plateau gefahren. Der Fahrer steigt aus und der PKW wird vorschriftsmäßig für den Transport gesichert. Dann kann das Plateau mit dem PKW wieder in den Kofferaufbau eingefahren werden. Nachdem die hintere Ladeöffnung des Kofferaufbaus geschlossen wurde, kann der Transport beginnen.

Mit den bekannten Autotransportern können sich bei Fahrzeugen mit sehr geringer Bodenfreiheit von nur wenigen Zentimetern Probleme beim Auffahren auf das schräge Plateau ergeben. Derartige Fahrzeuge können daher nur mit großem Aufwand verladen werden.

### DARSTELLUNG DER ERFINDUNG

Ausgehend von diesem vorbekannten Stand der Technik liegt der Erfindung die Aufgabe zugrunde, einen verbesserten Autotransporter mit geschlossenem Kofferaufbau anzugeben, bei dem auch Fahrzeuge mit einer geringen Bodenfreiheit problemlos transportiert werden können.

Das erfindungsgemäße Fahrzeug zum Transportieren von einem PKW ist durch die Merkmale des Hauptanspruchs 1 gegeben. Sinnvolle Weiterbildungen der Erfindung sind Gegenstand von sich an den Hauptanspruch anschließenden weiteren Ansprüchen.

Das erfindungsgemäße Fahrzeug zum Transportieren von einem PKW besitzt einen geschlossenen Kofferaufbau, innerhalb dessen ein Plateau angeordnet ist. In seiner Transportposition befindet sich das Plateau innerhalb des Kofferaufbaus. Das Plateau kann in eine Ladeposition gebracht werden, bei der das hintere Ende des Plateaus auf der Fahrbahn aufliegt und das vordere Ende des Plateaus im Bereich der hinteren Ladeöffnung des Kofferaufbaus befestigt ist, so dass sich das Plateau etwa auf Höhe der hinteren Ladekante des Kofferaufbaus befindet. Erfindungsgemäß ist zumindest ein Hubelement vorhanden, durch das das vordere Ende des Plateaus in einer etwa senkrechten Bewegung abgesenkt werden kann, so dass auch das vordere Ende des Plateaus auf der Fahrbahn aufliegt. Das Plateau befindet sich somit in einer etwa waagrechten Position, so dass die zu transportierenden Fahrzeuge nicht mehr auf eine schräge Rampe auffahren müssen. Dadurch können auch Fahrzeuge mit einer sehr geringen Bodenfreiheit ohne größeren Aufwand auf das Plateau auffahren.

Das hintere Ende des Plateaus kann vorzugsweise mit Fahrrollen ausgestattet sein. Dadurch kann das hintere Ende des Plateaus beim Absenken des vorderen Endes desselben ein Stück weit nach hinten verschoben werden. Darüber hinaus erleichtern die Fahrrollen am hinteren Ende des Plateaus das Einfahren des Plateaus in den Kofferaufbau.

Bei einer ersten Ausführungsform kann das zumindest eine Hubelement an einer Stützvorrichtung befestigt sein, die innerhalb des Kofferaufbaus längsverschieblich gelagert ist. Die Stützvorrichtung kann insbesondere mit zumindest einem Zahnrad ausgestattet und über dieses an zumindest einer in Längsrichtung des Kofferaufbaus angeordneten Zahnstange längsverschieblich gelagert sein. Vorzugsweise können zwei Zahnstangen vorhanden sein, die an den beiden Seiten des Kofferaufbaus angeordnet sind. Alternativ dazu kann die Stützvorrichtung mit einem Kettenrad und/oder einer Förderkette ausgestattet sein und über dieses an zumindest einer Zugkette längsverschieblich gelagert sein. Dadurch kann das Ein- und Ausfahren des Plateaus zwangsgesteuert über einen motorischen Antrieb der Stützvorrichtung erfolgen.

Vorzugsweise kann das vordere Ende des Plateaus durch den an der Stützvorrichtung befestigten Hubzylinder über die Ladekante hinweg angehoben werden. Beim Einfahren des Plateaus kann die Stützvorrichtung somit ein Stück weit in den Kofferaufbau zurückfahren und das Plateau hinter sich herziehen, ohne dass das hintere Ende des Plateaus den Kontakt mit der Fahrbahn verlieren würde. Erst wenn das Plateau bereits ein Stück weit eingefahren wurde und an die Ladekante des Kofferaufbaus anstößt, wird das hintere Ende des Plateaus beim weiteren Einfahren in den Kofferaufbau angehoben. Der Schwerpunkt des Plateaus und des auf dem Plateau abgestellten PKW liegt beim Anheben des hinteren Endes des Plateaus bereits sehr nahe am hinteren Ende des Kofferaufbaus - oder sogar bereits innerhalb des Kofferaufbaus, so dass die Belastung für die Stützvorrichtung und die Zahnstangen deutlich geringer ist als bei einem sofortigen Anheben des hinteren Endes des Plateaus. Dies kann insbesondere beim Transport von schweren PKW von Vorteil sein. Um das erfindungsgemäße Fahrzeug möglichst universell einsetzen zu können, ist es erforderlich, auch schwere PKW transportieren zu können. Insbesondere Datenkontrollmodelle für die Automobilindustrie können ein sehr hohes Gewicht aufweisen, da sie teilweise aus Ton oder aus Plastilin gefertigt sind. Auch bei Sonderschutzfahrzeugen, also Fahrzeugen mit einer integrierten Panzerung zum Schutz der Insassen und/oder der Ladung vor äußeren Angriffen kann das Fahrzeuggewicht durch die integrierte Panzerung um etwa eine Tonne größer sein als bei einem entsprechenden Fahrzeug ohne integrierte Panzerung. Gerade bei Datenkontrollmodellen oder Sonderschutzfahrzeugen ist jedoch ein Transport in einem geschlossenen Kofferaufbau von großer Bedeutung, da die PKW möglichst diskret und unter Geheimhaltung transportiert werden sollen.

Bei einer zweiten Ausführungsform kann das Plateau in zwei seitlichen Längsschienen, die innerhalb des Kofferaufbaus vorhanden sind, verschieblich gelagert sein. Das vordere Ende der beiden seitlichen Längsschienen kann durch zumindest ein zweites Hubelement angehoben werden, so dass die beiden Längsschienen und damit auch das innerhalb des Kofferaufbaus vorhandene Plateau, geneigt ausgerichtet sind. Aus dieser geneigten Position heraus kann das Plateau aus dem Kofferaufbau herausgefahren werden. Dies kann insbesondere über eine Seilwinde erfolgen. Die Seilwinde und auch das zumindest eine zweite Hubelement können insbesondere am vorderen Ende des Kofferaufbaus angeordnet sein. Eine solche Ausführungsform ist konstruktiv einfach umzusetzen und somit wirtschaftlich günstig.

Sofern das Ausfahren des Plateaus aus dem Kofferaufbau bei dieser Ausführungsform lediglich durch das Eigengewicht des Plateaus und damit durch die Schwerkraft erfolgt, kann es vorkommen, dass das Plateau nicht vollständig ausgefahren wird. Dies kann beispielsweise bei unebenem Fahrbahnbelag der Fall sein. Sollte das Plateau nicht vollständig ausgefahren sein, kann das vordere Ende des Plateaus nicht abgesenkt werden, da sich dieses noch ein Stück weit innerhalb des Kofferaufbaus befindet. In diesem Fall müsste der Autotransporter ein Stück weit nach vorne verfahren werden, um das Plateau vollständig auszufahren. Vorzugsweise kann daher im Bereich der seitlichen Längskanten des Plateaus zumindest eine Zahnstange angeordnet sein, die mit zumindest einem Zahnrad in Kontakt steht. Das zumindest eine Zahnrad kann über einen motorischen Antrieb bewegt werden, und somit für ein zwangsgesteuertes Ausfahren des Plateaus sorgen.

Um das Einfahren des Plateaus mit darauf befindlichem PKW zu erleichtern, kann bei den beiden oben beschriebenen Ausführungsformen ein weiteres Hubelement vorhanden sein, das im Bereich des hinteren Endes des Plateaus angeordnet ist und dieses hintere Ende des Plateaus anheben kann. Nach dem Auffahren und Sichern des zu transportierenden PKW kann somit das Plateau in einer waagrechten Position durch das vordere und das hintere Hubelement so weit angehoben werden, dass ein Einfahren in den Kofferaufbau möglich ist. Das weitere Hubelement kann vorzugsweise mit Fahrrollen ausgestattet sein, um das Einfahren in den Kofferaufbau zu erleichtern.

Vorzugsweise kann das weitere Hubelement lösbar am hinteren Bereich des Plateaus befestigt sein. Auf diese Weise kann das weitere Hubelement entfernt werden, wenn der PKW auf das Plateau auffährt, so dass die Breite des Plateaus voll genutzt werden kann. Alternativ oder zusätzlich dazu kann das Hubelement verschwenkbar am hinteren Ende des Plateaus angeordnet sein.

Mit dem erfindungsgemäßen Fahrzeug kann es möglich sein, Fahrzeuge mit einem Gewicht von über vier Tonnen sicher und diskret zu transportieren. Bei Sondermodellen wie beispielsweise bei gepanzerten Fahrzeugen oder bei Datenkontrollmodellen werden solche Lasten bereits durch ein einzelnes Fahrzeug erreicht. Es sind jedoch eine Reihe von hochpreisigen Fahrzeugen auf dem Markt erhältlich, die ein deutlich geringeres Gewicht aufweisen und ebenfalls diskret transportiert werden sollen. Daher wäre es wünschenswert, mit dem erfindungsgemäßen Fahrzeug auch mehrere Fahrzeuge gleichzeitig transportieren zu können. In einer besonders bevorzugten Ausführungsform kann daher ein erstes Plateau vorhanden sein, dessen hinteres und vorderes Ende in der Ladeposition auf der Fahrbahn aufliegen können, wie es oben bereits beschrieben wurde. Darüber hinaus kann ein zweites Plateau vorhanden sein, das in der Ladeposition parallel zum ersten Plateau vorhanden ist und auf diesem aufliegt. Mittels zumindest einem weiteren Hubelement kann dass hintere Ende des zweiten Plateaus angehoben werden. Nachdem ein erstes Fahrzeug auf das auf dem ersten Plateau aufliegende zweite Plateau aufgefahren ist, kann also das zweite Plateau durch das weitere Hubelement angehoben werden, so dass auf dem ersten Plateau ausreichend Platz für ein zweites Fahrzeug geschaffen wird. Nach dem Auffahren des zweiten Fahrzeugs kann das erste Plateau zusammen mit dem zweiten Plateau wie beschrieben angehoben und in den geschlossenen Kofferaufbau eingefahren werden.

Um auf dem ersten Plateau ausreichend Platz für das zweite Fahrzeug bereitstellen zu können, kann vorzugsweise ein weiteres Hubelement vorhanden sein, durch das das vordere Ende des zweiten Plateaus angehoben werden kann.

Insbesondere für den Transport von aus Ton oder aus Plastilin gefertigten Datenkontrollmodellen für die Automobilindustrie kann eine Temperaturregelung des Innenraums des geschlossenen Kofferaufbaus vorteilhaft sein. Der geschlossene Kofferaufbau kann daher in einer vorteilhaften Ausführungsform gekühlt werden können, so dass bei hohen Außentemperaturen eine Verformung der Datenkontrollmodelle verhindert werden kann. Alternativ oder zusätzlich dazu kann der geschlossene Kofferaufbau beheizt werden, so dass es bei zu geringen Außentemperaturen nicht zu einer Beschädigung der Datenkontrollmodelle kommen kann.

Weitere Vorteile und Merkmale der Erfindung sind den in den Ansprüchen ferner angegebenen Merkmalen sowie den nachstehenden Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine schematische Ansicht einer ersten Ausführungsform des erfindungsgemäßen Fahrzeugs mit ausgefahrenem, schrägen Plateau,
- Fig. 2: eine schematische Ansicht des Fahrzeugs gemäß Fig. 1 mit waagrecht abgesenktem Plateau, auf dem ein PKW abgestellt ist,
- Fig. 3: eine schematische Ansicht des Fahrzeugs gemäß Fig. 2 mit angehobenem, schrägen Plateau,
- Fig. 4: eine schematische Ansicht des Fahrzeugs gemäß Fig. 3 mit weiter angehobenem Plateau,
- Fig. 5: eine schematische Ansicht des Fahrzeugs gemäß Fig. 4 mit teilweise eingefahrenem Plateau,
- Fig. 6: eine schematische Ansicht des Fahrzeugs gemäß Fig. 5 mit weiter eingefahrenem Plateau,
- Fig. 7: eine schematische Ansicht des Fahrzeugs gemäß Fig. 6 mit vollständig eingefahrenem Plateau,
- Fig. 8: eine schematische Ansicht des Fahrzeugs gemäß Fig. 7 mit abgesenktem Plateau,
- Fig. 9: eine schematische Ansicht einer zweiten Ausführungsform des erfindungsgemäßen Fahrzeugs mit ausgefahrenem, schrägen Plateau,
- Fig. 10: eine schematische Ansicht des Fahrzeugs gemäß Fig. 9 mit waagrecht abgesenktem Plateau, auf dem ein PKW abgestellt ist,
- Fig. 11: eine schematische Ansicht des Fahrzeugs gemäß Fig. 10 mit angehobenem, schrägen Plateau,
- Fig. 12: eine schematische Ansicht des Fahrzeugs gemäß Fig. 11 mit teilweise eingefahrenem Plateau,
- Fig. 13: eine schematische Ansicht des Fahrzeugs gemäß Fig. 12 mit vollständig eingefahrenem Plateau,
- Fig. 14: eine schematische Ansicht des Fahrzeugs gemäß Fig. 13 mit abgesenktem Plateau,
- Fig. 15: eine schematische Ansicht einer dritten Ausführungsform des erfindungsgemäßen Fahrzeugs mit ausgefahrenem, schrägen Plateau,
- Fig. 16: eine schematische Ansicht des Fahrzeugs gemäß Fig. 15 mit teilweise eingefahrenem Plateau,
- Fig. 17: eine schematische Ansicht einer vierten Ausführungsform des erfindungsgemäßen Fahrzeugs mit ausgefahrenem, schrägen ersten Plateau und darauf liegendem zweiten Plateau,
- Fig. 18: eine schematische Ansicht des Fahrzeugs gemäß Fig. 17 mit waagrecht abgesenktem ersten Plateau und darauf liegen-dem zweiten Plateau auf dem ein erster PKW abgestellt ist,
- Fig. 19: eine schematische Ansicht des Fahrzeugs gemäß Fig. 18 mit angehobenem vorderen Ende des zweiten Plateaus,
- Fig. 20: eine schematische Ansicht des Fahrzeugs gemäß Fig. 19 mit vollständig angehobenem zweiten Plateau,
- Fig. 21: eine schematische Ansicht des Fahrzeugs gemäß Fig. 20 mit auf dem ersten Plateau abgestelltem zweiten PKW,
- Fig. 22: eine schematische Ansicht des Fahrzeugs gemäß Fig. 21 mit waagrecht angehobenem ersten Plateau,
- Fig. 23: eine schematische Ansicht des Fahrzeugs gemäß Fig. 22 mit teilweise eingefahrenem ersten Plateau und
- Fig. 24: eine schematische Ansicht des Fahrzeugs gemäß Fig. 23 mit vollständig eingefahrenem ersten Plateau.

### WEGE ZUM AUSFÜHREN DER ERFINDUNG

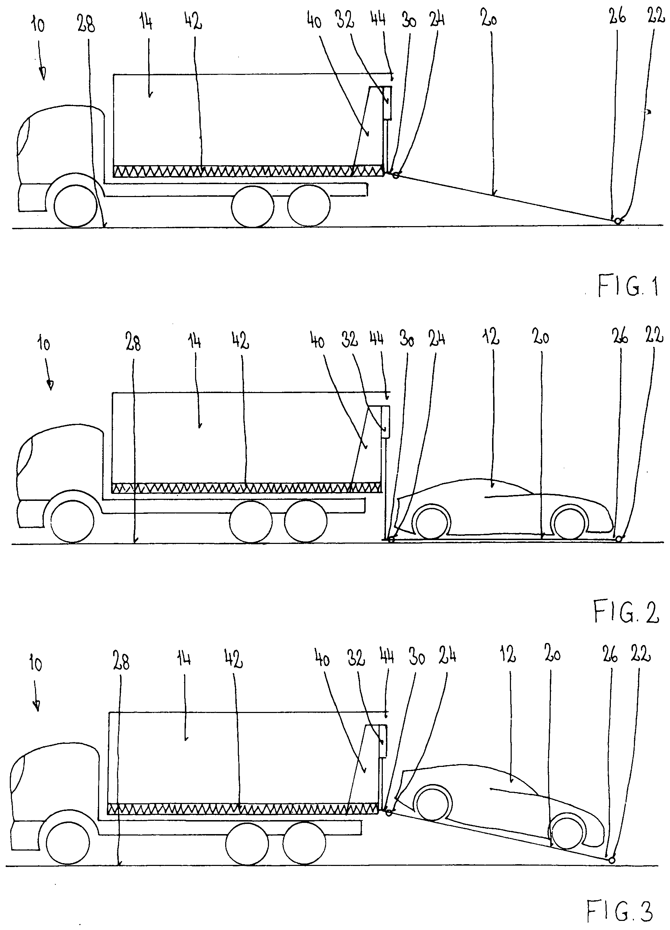

Eine erste Ausführungsform des erfindungsgemäßen Fahrzeugs 10 zum Transportieren von zumindest einem PKW 12 ist in den Fig. 1 bis 8 dargestellt.

Bei dem Fahrzeug 10 handelt es sich im vorliegenden Beispielsfall um einen dreiachsigen Motorwagen. Im Gegensatz dazu könnte es sich auch um einen Motorwagen mit mehr oder mit weniger Achsen handeln. Es wäre auch möglich, einen Anhänger für einen Motorwagen oder Sattelzug oder auch einen Sattelzugauflieger als erfindungsgemäßes Fahrzeug zu verwenden. Prinzipiell könnte jedes beliebige Fahrzeug oder auch jeder Anhänger verwendet werden, der mit einem geschlossenen Kofferaufbau 14 ausgestattet ist.

Bei dem zu transportierenden PKW 12 handelt es sich im vorliegenden Beispielsfall um einen Sportwagen. Im Gegensatz dazu könnte es sich beispielsweise auch um einen Rennwagen, ein Zweirad, ein Sonderschutzfahrzeug oder ein Datenkontrollmodell handeln.

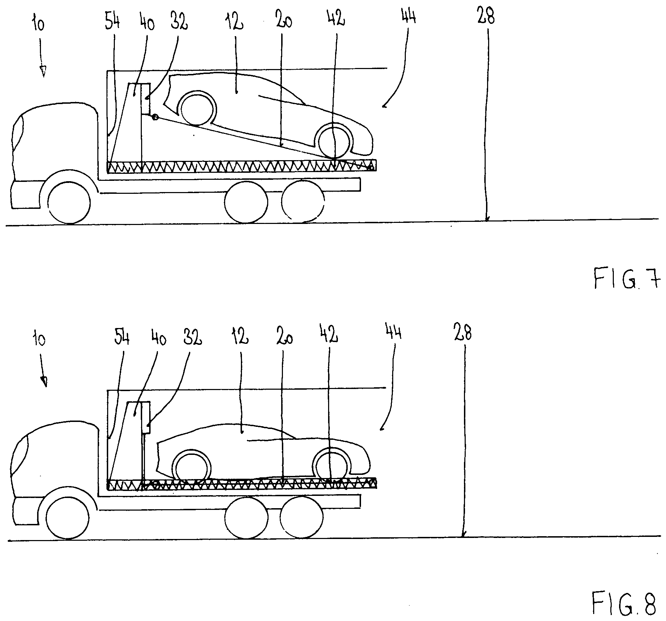

Der geschlossene Kofferaufbau 14 des Fahrzeugs 10 ist mit einem Plateau 20 ausgestattet, das in seiner Transportposition (siehe Fig. 8) vollständig innerhalb des Kofferaufbaus 14 angeordnet ist. Auf diese Weise kann beim Transport des PKW 12 größtmögliche Diskretion und Geheimhaltung gewährleistet werden. Das Plateau 20 ist mit hinteren Fahrrollen 22 und vorderen Fahrrollen 24 ausgestattet. Die hinteren Fahrrollen 22 sind jeweils seitlich am hinteren Ende 26 des Plateaus 20 gelagert. Die vorderen Fahrrollen 24 sind jeweils seitlich im vorderen Bereich des Plateaus 20 gelagert.

Nach dem Ausfahren des Plateaus 20 aus dem geschlossenen Kofferaufbau 14 liegt zunächst lediglich das hintere Ende 26 des Plateaus 20 auf der Fahrbahn 28 auf. Das vordere Ende 30 des Plateaus 20 ist an einem Hubzylinder 32 befestigt. Durch den Hubzylinder 32 kann das vordere Ende 30 des Plateaus 20 ebenfalls so weit abgesenkt werden, dass das vordere Ende 30 ebenfalls auf der Fahrbahn 28 aufliegt und sich das Plateau 20 somit in einer etwa waagrechten Position befindet (siehe Fig. 2). Dazu muss in der Regel ein Höhenunterschied von etwa einem Meter überwunden werden. In dieser Position des Plateaus kann der zu transportierende PKW besonders einfache auf das Plateau 20 auffahren, da lediglich ein durch die Dicke des Plateaus 20 resultierender Höhenunterschied zu überwinden ist, nicht jedoch eine schräge Rampe aufgefahren werden muss. Dies ist insbesondere bei PKW 12 mit einer nur geringen Bodenfreiheit von Bedeutung.

Die Dicke des Plateaus beträgt im vorliegenden Beispielsfall etwa 4 bis 6 Zentimeter. Eine solche Dicke ist erforderlich, um auch Fahrzeuge mit einem höheren Eigengewicht, beispielsweise Datenkontrollmodelle oder gepanzerte Fahrzeuge, mit dem erfindungsgemäßen Fahrzeug 10 transportieren zu können. Sofern eine möglichst universelle Einsatzmöglichkeit des Fahrzeugs 10 nicht gewünscht oder erforderlich sein sollte und lediglich verhältnismäßig leichte PKW 12 zu transportieren sind, könnte das Plateau 20 auch mit einer geringeren Dicke ausgebildet sein.

Der Hubzylinder 32 zum Absenken des vorderen Endes 30 des Plateaus 20 ist bei der ersten Ausführungsform an einer Stützvorrichtung 40 gelagert. Die Stützvorrichtung 40 ist innerhalb des Kofferaufbaus 14 längsverschieblich gelagert. Der Kofferaufbau 14 ist dafür an seinen beiden Längsseiten mit jeweils einer Zahnstange 42 ausgestattet. In diese Zahnstange 42 greifen zwei an der Stützvorrichtung 40 gelagerten Zahnräder ein, die über einen motorischen Antrieb bewegt werden können. Dadurch kann die Stützvorrichtung 40 zwangsgesteuert innerhalb des Kofferaufbaus 14 nach vorne oder nach hinten in den Bereich der hinteren Ladeöffnung 44 des Kofferaufbaus 14 verschoben werden.

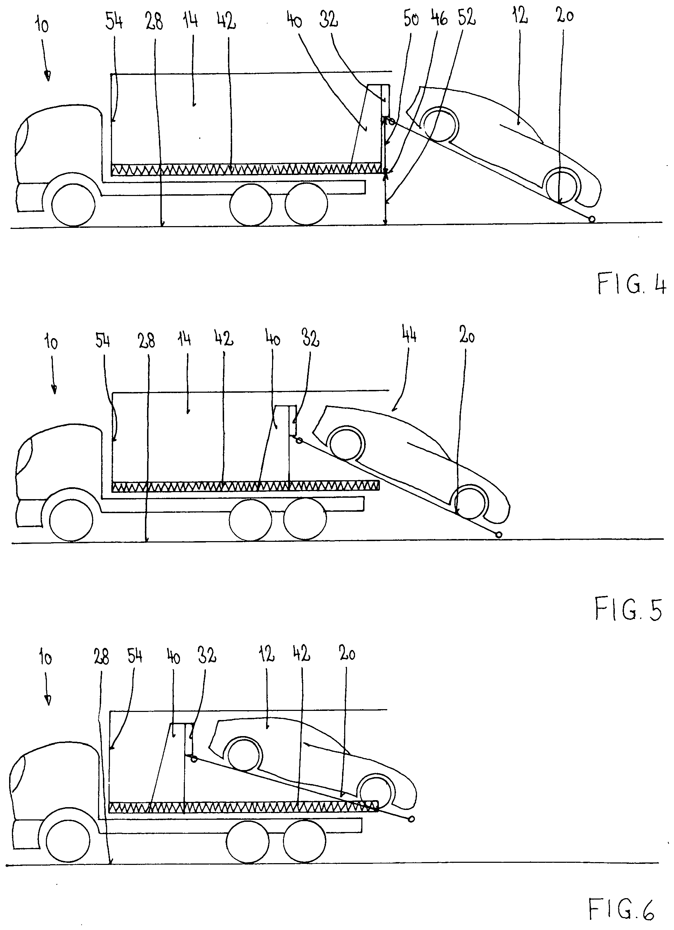

Sofern sich die Stützvorrichtung 40 im Bereich der hinteren Ladeöffnung 44 des Kofferaufbaus 14 befindet, kann das vordere Ende 30 des Plateaus 20 auf die Fahrbahn 28 abgesenkt werden. Nach dem Auffahren und Sichern des PKW 20 (siehe Fig. 2) kann das Plateau 20 durch den Hubzylinder 32 wieder auf die Höhe der Ladekante 46 des Kofferaufbaus 14 angehoben werden (siehe Fig. 3). Sofern die Stützvorrichtung bereits in dieser Position des Plateaus 20 in den Kofferaufbau 14 zurückgefahren würde, würde das hintere Ende 26 des Plateaus direkt den Kontakt mit der Fahrbahn 28 verlieren. Das Plateau 20 und insbesondere auch die Befestigung der Stützvorrichtung 40 an den Zahnstangen 42 würde dadurch sehr hohen Belastungen ausgesetzt, die insbesondere bei einem Transport von schweren PKW 12 zu einem raschen Verschleiß führen würden. Daher wird das vordere Ende 30 des Plateaus 20 zunächst durch den Hubzylinder 32 ein Stück 50 über die Höhe der Ladekante 46 hinweg angehoben (siehe Fig. 4). Im vorliegenden Beispielsfall entspricht der Abstand 50 zwischen der Ladekante 46 und dem vorderen Ende 30 der Plateaus 20 etwa dem Abstand 52 zwischen der Ladekante 46 und der Fahrbahn 28. Abhängig von dem Gewicht und der Höhe des zu transportierenden PKW kann auch eine geringere oder eine stärke Anhebung ausreichend beziehungsweise erforderlich sein.

In dieser Position des Plateaus 20 erfolgt nun das Hineinfahren in den Kofferaufbau, indem die Stützvorrichtung in Richtung des vorderen Endes 54 des Kofferaufbaus verfahren wird. Dadurch kann das hintere Ende 26 des Plateaus 20 noch eine Weile Kontakt mit der Fahrbahn 28 haben, so dass das Plateau 20 nicht übermäßig beansprucht wird (siehe Fig. 5). Erst nachdem die Stützvorrichtung 40 bereits ein Stück weit nach vorne verfahren wurde, verliert das hintere Ende 26 des Plateaus 20 den Kontakt mit der Fahrbahn 28 (siehe Fig. 6). Die Stützvorrichtung 40 wird anschließend bis zum vorderen Ende 54 des Kofferaufbaus 14 verfahren (siehe Fig. 7). Anschließend wird das vordere Ende 30 des Plateaus 20 durch den Hubzylinder 32 wieder so weit abgesenkt, dass das Plateau 20 in einer waagrechten Transportposition angelangt ist (siehe Fig. 8). Dabei wird das Plateau 20 von den vorderen und hinteren Fahrrollen 24, 22 abgestützt. Anschließend kann die hintere Ladeöffnung 44 des Kofferaufbaus 14 durch hier nicht weiter dargestellte Elemente verschlossen werden. Das Ausladen eines transportierten PKW 12 erfolgt durch die umgekehrten Verfahrensschritte.

Abhängig von der Höhe des zu transportierenden PKW 12 kann es erforderlich sein, bereits während des Verfahrens der Stützvorrichtung 40 mit dem Absenken des vorderen Endes 30 des Plateaus 20 zu beginnen.

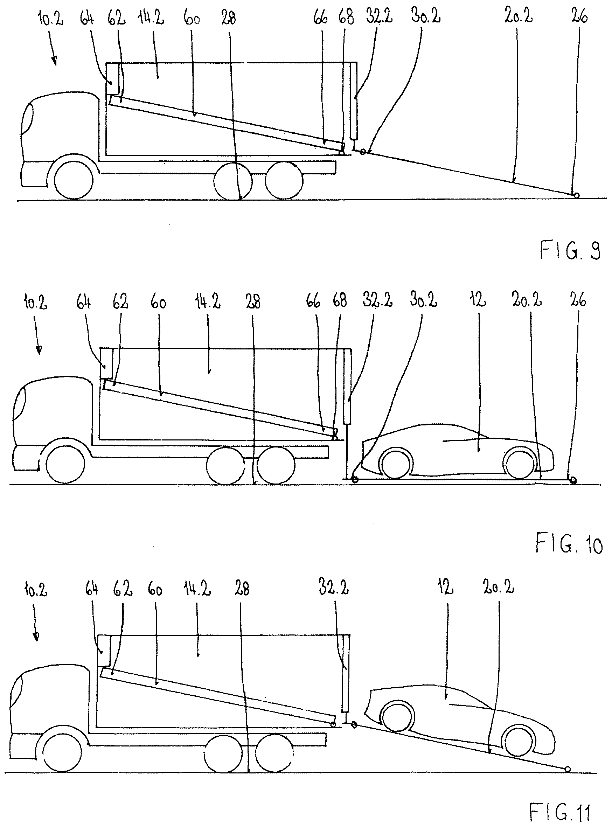

Eine zweite Ausführungsform des erfindungsgemäßen Fahrzeugs 10.2 zum Transportieren von zumindest einem PKW 12 ist in den Fig. 9 bis 14 dargestellt.

Der Hubzylinder 32.2 zum Absenken des vorderen Endes 30.2 des Plateaus 20.2 auf die Fahrbahn 28 ist bei der zweiten Ausführungsform im Bereich der hinteren Ladeöffnung 44.2 des Kofferaufbaus 14.2 gelagert. Nach dem Auffahren des zu transportierenden PKW 12 wird das vordere Ende 30.2 des Plateaus 20.2 durch den Hubzylinder 32.2 wieder etwa auf die Höhe der Ladekante 46 angehoben. Das Einfahren des Plateaus 20 erfolgt im vorliegenden Beispielsfall über eine nicht näher dargestellte Seilwinde, die am vorderen Ende 54 des Kofferaufbaus 14.2 befestigt ist. Das Plateau 20.2 wird durch die Seilwinde in zwei in Längsrichtung des Kofferaufbaus 14.2 vorhandene Längsschienen 60 gezogen. Die Längsschienen 60 sind dazu im gleichen Winkel wie das Plateau 20.2 geneigt. Um dies zu erreichen, wird das vordere Ende 62 der beiden Längsschienen 60 durch einen zweiten Hubzylinder 64, der am vorderen Ende 54 des Kofferaufbaus 14.2 befestigt ist, ein Stück weit nach oben verschwenkt. Das hintere Ende 66 der Längsschienen 60 ist mit jeweils einer Rolle 68 versehen, um ein Verschwenken der Längsschienen 60 zu erleichtern.

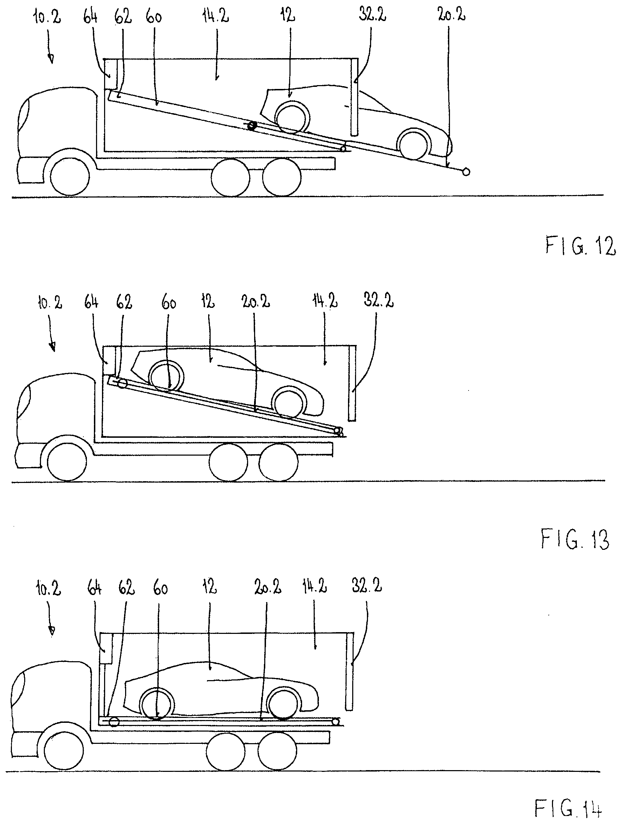

Während des Einfahrens wird das Plateau 20.2 somit auch durch die Längsschienen 60 abgestützt (siehe Fig. 12). Sobald das Plateau 20.2 vollständig eingefahren wurde (siehe Fig. 13) können die Längsschienen 60 durch den zweiten Hubzylinder 64 wieder abgesenkt werden, so dass sich die Längsschienen 60 und damit auch das Plateau 20.2 in einer waagrechten Transportposition befindet (siehe Fig. 14). Anschließend kann die hintere Ladeöffnung 44 des Kofferaufbaus 14.2 durch hier nicht weiter dargestellte Elemente verschlossen werden.

Abhängig von der Höhe des zu transportierenden PKW 12 kann es auch hier erforderlich sein, bereits während des Einfahrens des Plateaus 20.2 mit dem Absenken des vorderen Endes 62 der Längsschienen 60 zu beginnen.

Das Ausfahren des Plateaus 20.2 erfolgt in diesem Fall lediglich durch die Schwerkraft und nicht zwangsgesteuert. Nach dem Anheben der vorderen Enden 62 der Längsschienen 60 wird die Seilwinde gelöst und das Plateau 20.2 rollt mit den Fahrrollen 22, 24 aus den Längsschienen 60 nach hinten aus dem Kofferaufbau 14.2 raus. Bei kleinen Unebenheiten in der Fahrbahn 28 kann es vorkommen, dass das Plateau 20.2 nicht vollständig aus den Längsschienen 60 rollt, so dass sich das vordere Ende 30.2 des Plateaus 20.2 noch innerhalb der Längsschienen 60 befindet. In diesem Fall wäre ein Absenken des vorderen Endes 30.2 des Plateaus 20.2 auf die Fahrbahn 28 nicht möglich.

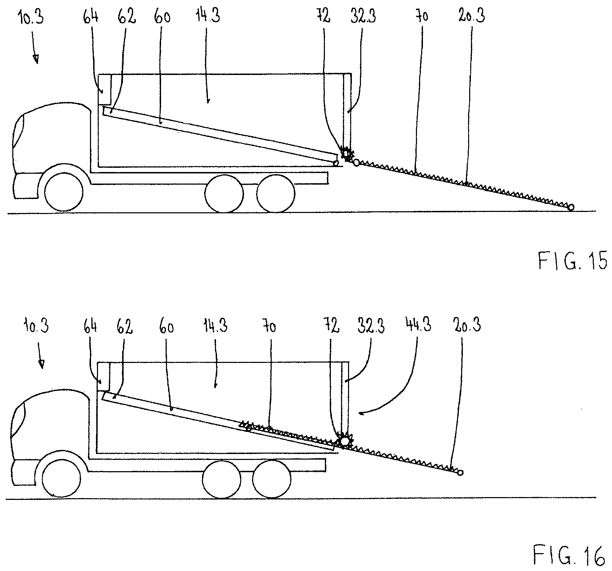

Aus diesem Grund kann das Plateau 20.3 gemäß einer in den Fig. 15 und 16 dargestellten dritten Ausführungsform an seinen beiden seitlichen Längskanten jeweils mit einer Zahnstange 70 versehen sein. Darüber hinaus kann im Bereich der hinteren Ladeöffnung 44.3 des Kofferaufbaus 14.3 ein Zahnrad 72 vorhanden sein, das in die Zahnstangen 70 eingreift. Im vorliegenden Beispielsfall ist das Zahnrad 72 an dem Hubzylinder 32.3 befestigt. Das Zahnrad 72 kann über einen motorischen Antrieb bewegt werden, so dass ein zwangsgesteuertes Ausfahren des Plateaus 20.3 möglich ist.

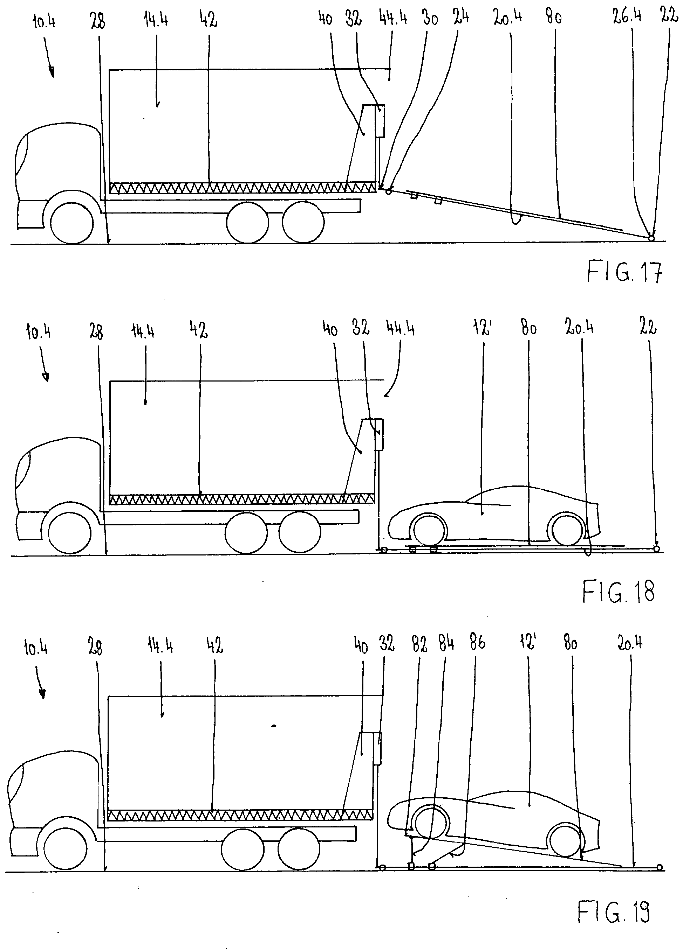

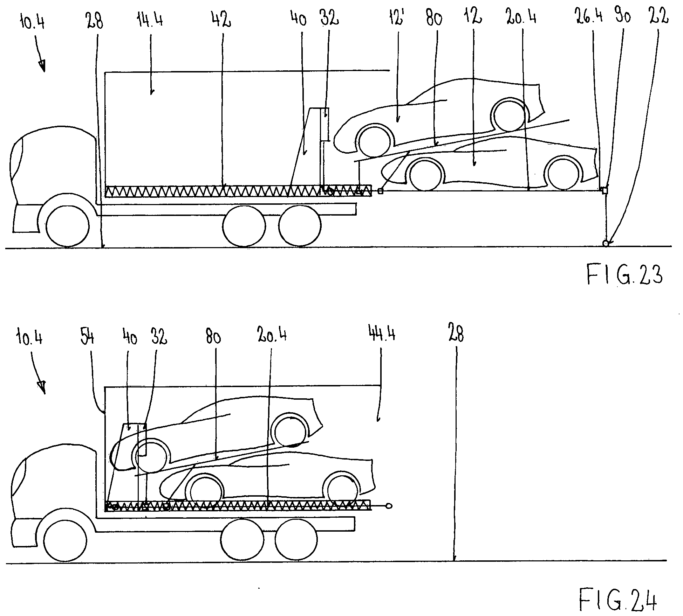

Eine vierte Ausführungsform des erfindungsgemäßen Fahrzeugs 10.4 zum Transportieren von zwei PKW 12, 12' ist in den Fig. 17 bis 24 dargestellt. Der geschlossene Kofferaufbau 14.4 des Fahrzeugs 10.4 ist mit einem ersten Plateau 20.4 ausgestattet, das in seiner Transportposition (siehe Fig. 24) vollständig innerhalb des Kofferaufbaus 14.4 angeordnet ist. Das Plateau 20.4 ist mit hinteren Fahrrollen 22 und vorderen Fahrrollen 24 ausgestattet. Auf dem ersten Plateau 20.4 ist ein zweites Plateau 80 vorhanden. In der Ladeposition (siehe Fig. 18) ist das zweite Plateau 80 parallel zu dem ersten Plateau 20.4 vorhanden und liegt unmittelbar auf dem ersten Plateau 20.4 auf.

Sofern nur eine einzelner PKW 12 mit dem Fahrzeug 10.4 transportiert werden soll, kann das zweite Plateau 80 in seiner in Fig. 18 dargestellten Position bleiben und das erste Plateau 20.4 wie für die Fig. 1 bis 8 beschrieben in dem geschlossenen Kofferaufbau 14.4 verladen werden. Diese Variante bietet sich insbesondere dann an, wenn PKW 12 mit einem hohen Eigengewicht - beispielsweise Datenkontrollmodelle oder gepanzerte Fahrzeuge - mit dem Fahrzeug 10.4 transportiert werden sollen.

Das erfindungsgemäße Fahrzeug 10.4 bietet jedoch auch die Möglichkeit, zwei PKW 12, 12' gleichzeitig in dem geschlossenen Kofferaufbau 14.4 zu transportieren. Bei den transportierten PKW 12, 12' kann es sich wie im dargestellten Ausführungsbeispiel um zwei baugleiche PKW 12, 12' handeln, es wäre jedoch auch möglich, zwei unterschiedliche PKW 12, 12' gemeinsam zu transportieren. Auf diese Weise kann beim Transport von PKW 12, 12' mit einem geringeren Eigengewicht das zur Verfügung stehende Ladevolumen optimal ausgenutzt werden.

Nach dem Ausführen des ersten Plateaus 20.4 aus dem geschlossenen Kofferaufbau 14.4 liegt zunächst lediglich das hintere Ende 26 des ersten Plateaus 20.4 auf der Fahrbahn 28 auf. Das vordere Ende 30 des ersten Plateaus 20.4 ist an einem Hubzylinder 32 befestigt. Durch den Hubzylinder 32 kann das vordere Ende 30 des ersten Plateaus 20.4 so weit abgesenkt werden, dass das vordere Ende 30 des ersten Plateaus ebenfalls auf der Fahrbahn 28 aufliegt und sich das erste Plateau somit in einer etwa waagrechten Position befindet (siehe Fig. 18). Das zweite Plateau 80 liegt direkt auf dem erste Plateau 20.4 auf.

In dieser Position der beiden Plateaus 20.4, 80 kann der erste zu transportierende PKW 12' einfach auf die Plateaus 20.4, 80 auffahren, da lediglich ein erster Höhenunterschied, der aus der Dicke des ersten Plateaus 20.4 resultiert, und ein zweiter Höhenunterschied, der aus der Dicke des zweiten Plateaus 80 resultiert, überwunden werden muss. Dies ist insbesondere bei PKW 12' mit einer nur geringen Bodenfreiheit von Bedeutung.

Der Hubzylinder 32 zum Absenken des vorderen Endes 30 des ersten Plateaus 20.4 ist an einer Stützvorrichtung 40 gelagert, wie dies bereits im Zusammenhang mit den Fig. 1 bis 8 beschrieben ist. Sofern sich die Stützvorrichtung 40 im Bereich der hinteren Ladeöffnung 44.4 des Kofferaufbaus 14.4 befindet, kann das vordere Ende 30 des ersten Plateaus 20.4 auf die Fahrbahn 28 abgesenkt werden. Nach dem Auffahren und Sichern des ersten PKW 12' (siehe Fig. 18) kann das vordere Ende 82 des zweiten Plateaus durch einen vorderen Hubzylinder 84 angehoben werden (siehe Fig. 19). Der vordere Hubzylinder 84 ist im vorliegenden Beispielsfall kurz hinter der vorderen Fahrrolle 24 des ersten Plateaus 20.4 an dem ersten Platzeau 20.4 befestigt und kann eine senkrechte Hubbewegung durchführen, um das vordere Ende 82 des zweiten Plateaus 80 anzuheben.

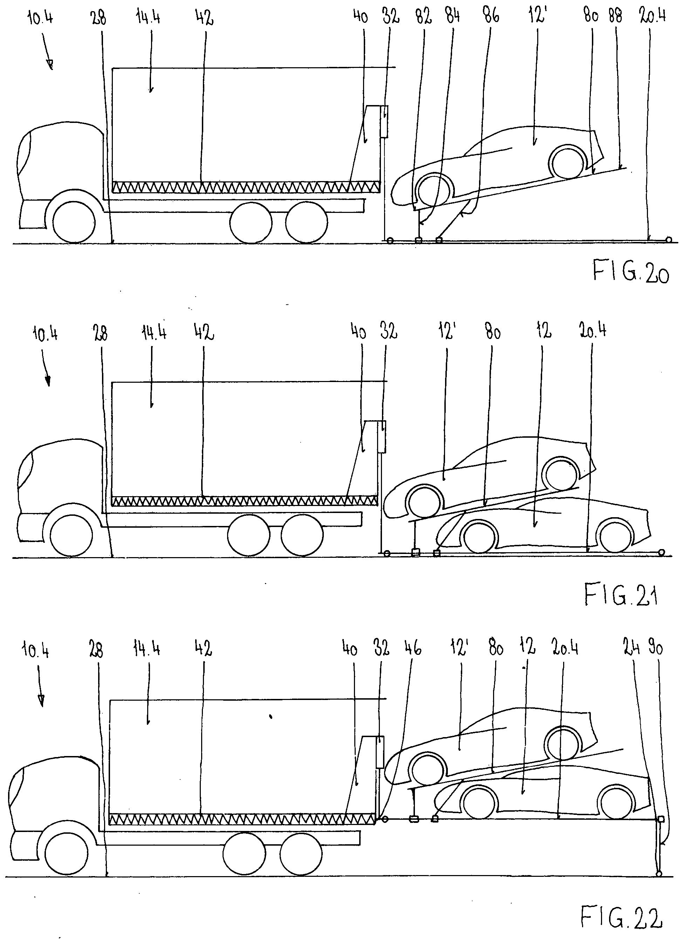

Bei dieser ersten Hubbewegung durch den vorderen Hubzylinder 84 wird ein hinterer Hubzylinder 86 ein Stück weit ausgefahren. Diese Bewegung des hinteren Hubzylinders 86 ist jedoch lediglich dem an dieser Stelle bereits vergrößertem Abstand der beiden Plateaus 20.4, 80 geschuldet, eine Hubbewegung des hinteren Hubzylinders 86 findet zu diesem Zeitpunkt noch nicht statt. Der hintere Hubzylinder 86 ist ein Stück hinter dem vorderen Hubzylinder 84 an dem ersten Plateau befestigt. Der hintere Hubzylinder 86 führt keine senkrechte, sondern vielmehr eine schräge Hubbewegung aus. Sobald der vordere Hubzylinder 84 seine Endposition erreicht hat, kann auch der hintere Hubzylinder 86 ausgefahren werden, um das zweite Plateau 80 vollständig von dem ersten Plateau 20.4 abzuheben. In seiner Endposition ist das zweite Plateau 80 im vorliegenden Beispielsfall schräg angeordnet, wobei das vordere Ende 82 des zweiten Plateaus 80 tiefer liegt als das hintere Ende 88 (siehe Fig. 20).

Der Abstand der beiden Plateaus 20.4, 80 ist dabei so gewählt, dass ein zweiter PKW 12 unter dem zweiten Plateau 80 auf das erste Plateau 20.4 auffahren kann (siehe Fig. 21). Abhängig von den Maßen des ersten und des zweiten PKW 12, 12' können die beiden Hubzylinder 84, 86 so programmiert werden, dass ausreichend Platz für beide PKW 12, 12' bleibt und beide PKW 12, 12' in dem geschlossenen Kofferaufbau 14.4 des Fahrzeugs 10.4 transportiert werden können. Im vorliegenden Beispielsfall wurden beide PKW 12, 12' vorwärts auf die Plateaus 20.4, 80 aufgefahren. Es wäre jedoch auch möglich, einen der beiden PKW 12, 12' vorwärts und einen rückwärts aufzufahren. Es wäre auch möglich, beide PKW 12, 12' rückwärts auf die Plateaus 20.4, 80 aufzufahren.

Nach dem Auffahren und Sichern des zweiten PKW 12 (siehe Fig. 21) kann das erste Plateau 20.4 waagrecht angehoben werden, bis die Höhe der Ladekante 46 des Kofferaufbaus 14.4 erreicht ist. Das Anheben des vorderen Endes 30 des ersten Plateaus 20.4 erfolgt dabei über den an der Stützvorrichtung 40 befestigten Hubzylinder 32. Das Anheben des hinteren Endes 26.4 des ersten Plateaus 20.4 erfolgt über einen weiteren Hubzylinder 90. Dieser weitere Hubzylinder 90 ist an dem hinteren Ende 26.4 des ersten Plateaus 20.4 befestigt und kann eine senkrechte Hubbewegung vollführen, um das hintere Ende 26.4 anzuheben. Die an dem hinteren Ende 26.4 vorhandenen Fahrrollen 22 sind so an dem Hubzylinder 90 befestigt, dass die Fahrrollen 22 auch nach dem Ausfahren des Hubzylinders 90 auf der Fahrbahn 28 aufliegen.

In dieser Position des ersten Plateaus 20.4 erfolgt das Hineinfahren in den geschlossenen Kofferaufbau 14.4. Dazu wird die Stützvorrichtung in Richtung des vorderen Endes 54 des Kofferaufbaus 14.4 verfahren (siehe Fig. 23). Das hintere Ende 26.4 des Plateaus wird durch den ausgefahrenen Hubzylinder 90 und die hinteren Fahrollen 22 so lange abgestützt, bis das erste Plateau fast vollständig in den Kofferaufbau 14.4 eingefahren wurde. Erst dann muss der Hubzylinder 90 wieder eingefahren werden. Dadurch kann die Beanspruchung der Stützvorrichtung 40 und der im Kofferaufbau 14.4 vorhandenen Zahnstange 42 zum Verschieben der Stützvorrichtung 40 minimiert werden, so dass möglichst lange Lebensdauern erreicht werden können.

Im vorliegenden Beispielsfall werden die beiden Plateaus 20.4, 80 ein Stück weit vor die Stützvorrichtung 40 eingefahren. Dazu kann der an der Stützvorrichtung 40 befestigte Hubzylinder 32 wieder ein Stück weit ausgefahren werden (siehe Fig. 24). Auf diese Weise kann die Länge des Kofferaufbaus 14.4 optimal ausgenutzt werden. Sofern dies nicht gewünscht oder konstruktiv nicht möglich sein sollte, könnten die beiden Plateaus auch in der in Fig. 8 dargestellten Endposition verbleiben.

Im Gegensatz zu der in der Zeichnung dargestellten Ausführungsform könnte auch das Fahrzeug 10.2 entsprechend den Fig. 9 bis 14 oder das Fahrzeug 10.3 entsprechend den Fig. 15 und 16 mit einem doppelten Plateau entsprechend den Fig. 17 bis 24 ausgebildet werden, so dass auch mit den Fahrzeugen 10.2, 10.3 ein Transport von zwei PKW 12, 12' gleichzeitig möglich wäre.

## Patentansprüche

1. Fahrzeug (10,10.4) zum Transportieren von zumindest einem PKW (12, 12'),
- mit einem geschlossenen Kofferaufbau (14, 14.4),
- mit einem Plateau (20, 20.4),
- wobei das Plateau (20,20.4) in seiner Transportposition innerhalb des Kofferaufbaus (14, 14.4) vorhanden ist,
- wobei das Plateau (20,20.4) aus dieser Transportposition in eine Ladeposition bringbar ist, bei der das hintere Ende (26, 26.4) des Plateaus (20, 20.4) auf der Fahrbahn (28) aufliegt und das vordere Ende (30) des Plateaus (20, 20.4) im Bereich der hinteren Ladeöffnung (44,44.4) des Kofferaufbaus (14, 14.4) befestigt ist,
- wobei zumindest ein Hubelement (32) vorhanden ist, durch das das vordere Ende (30) des Plateaus (20, 20.4) in dessen Ladeposition etwa senkrecht absenkbar ist, so dass auch das vordere Ende (30) des Plateaus (20, 20.4) auf der Fahrbahn (28) aufliegt,
- **dadurch gekennzeichnet, dass**
- das zumindest eine Hubelement (32) als Hubzylinder ausgebildet und an einer Stützvorrichtung (40) befestigt ist,
- die Stützvorrichtung (40) innerhalb des Kofferaufbaus (14, 14.4) längsverschieblich gelagert ist,
- das vordere Ende (30) des Plateaus (20, 20.4) durch die Stützvorrichtung in den Kofferaufbau hinein- und aus diesem hinausschiebbar ist.

2. Fahrzeug nach Anspruch 1,
- **dadurch gekennzeichnet, dass**
- das hintere Ende (26, 26.4) des Plateaus (20, 20.4) mit Fahrrollen (22) ausgestattet ist.

3. Fahrzeug nach Anspruch 1 oder 2,
- **dadurch gekennzeichnet, dass**
- die Stützvorrichtung (40) mit zumindest einem Zahnrad ausgestattet ist,
- die Stützvorrichtung (40) mit diesem Zahnrad an zumindest einer Zahnstange (42) längsverschieblich gelagert ist,
- die Zahnstange (42) in Längsrichtung des Kofferaufbaus (14, 14.4) angeordnet ist.

4. Fahrzeug nach einem der vorstehenden Ansprüche,
- **dadurch gekennzeichnet, dass**
- das vordere Ende (30) des Plateaus (20) durch das Hubelement (32) über die Ladekante (46) hinweg anhebbar ist.

5. Fahrzeug nach einem der vorstehenden Ansprüche,
- **dadurch gekennzeichnet, dass**
- ein weiteres Hubelement (90) vorhanden ist, das im Bereich des hinteren Endes (26.4) des Plateaus (20.4) angeordnet ist,
- das hintere Ende (26.4) des Plateaus (20.4) durch das weitere Hubelement (90) anhebbar ist.

6. Fahrzeug nach Anspruch 5,
- **dadurch gekennzeichnet, dass**
- das weitere Hubelement (90) mit Fahrrollen (22) ausgestattet ist.

7. Fahrzeug nach Anspruch 5 oder 6,
- **dadurch gekennzeichnet, dass**
- das weitere Hubelement lösbar am hinteren Bereich des Plateaus befestigbar ist.

8. Fahrzeug nach einem der Ansprüche 5 bis 7,
- **dadurch gekennzeichnet, dass**
- das weitere Hubelement verschwenkbar am hinteren Ende des Plateaus angeordnet ist.

9. Fahrzeug nach einem der vorstehenden Ansprüche,
- **dadurch gekennzeichnet, dass**
- ein erstes Plateau (20.4) vorhanden ist,
- das hintere Ende (26.4) und das vordere Ende (30) des ersten Plateaus (20.4) in der Ladeposition auf der Fahrbahn (28) aufliegen,
- ein zweites Plateau (80) vorhanden ist,
- das zweite Plateau (80) in der Ladeposition parallel zum ersten Plateau (20.4) vorhanden ist und auf diesem aufliegt,
- zumindest ein weiteres Hubelement (86) vorhanden ist, durch das das hintere Ende (88) des zweiten Plateaus (80) anhebbar ist.

10. Fahrzeug nach Anspruch 9,
- **dadurch gekennzeichnet, dass**
- zumindest ein weiteres Hubelement (84) vorhanden ist, durch das das vordere Ende (82) des zweiten Plateaus (80) anhebbar ist.

11. Fahrzeug nach einem der vorstehenden Ansprüche,
- **dadurch gekennzeichnet, dass**
- der geschlossene Kofferaufbau kühlbar und/oder heizbar ausgebildet ist.

12. Verfahren zum Verladen eines PKW (12, 12') in einem Fahrzeug (10, 10.4) mit folgenden Verfahrensschritten
a) ein Plateau (20, 20.4) wird aus dem geschlossenen Kofferaufbau (14, 14.4) des Fahrzeugs (10, 10.4) ausgefahren, so dass das Plateau (20, 20.4) mit seinem hinteren Ende (26, 26.4) auf der Fahrbahn (28) aufliegt und eine schräge Rampe bildet,
b) das vordere Ende (30) des Plateaus (20, 20.4) wird durch eine senkrechte Hubbewegung so abgesenkt, dass auch dieses Ende (30) des Plateaus (20, 20.4) auf der Fahrbahn (28) aufliegt,
c) der zu verladende PKW (12, 12') wird auf das Plateau (20, 20.4) aufgefahren,
d) das vordere Ende (30) des Plateaus (20, 20.4) wird durch eine senkrechte Hubbewegung so weit angehoben, dass es sich auf Höhe der Ladekante (46) befindet,
e) das Plateau (20, 20.4) wird in den geschlossenen Kofferaufbau (14, 14.4) des Fahrzeugs (10, 10.4) eingefahren,
- **dadurch gekennzeichnet, dass**
- das Plateau (20, 20.4) mittels einer in dem geschlossenen Kofferaufbau (14, 14.4) längsverschieblich gelagerten Stützvorrichtung (40) in den geschlossenen Kofferaufbau (14, 14.4) ein- und aus diesem ausgefahren wird.

13. Verfahren nach Anspruch 12,
- **dadurch gekennzeichnet, dass**
- nach Verfahrensschritt d) das vordere Ende (30) des Plateaus (20) durch eine weitere senkrechte Hubbewegung so weit angehoben wird, dass der Abstand (50) zwischen dem vorderen Ende (30) des Plateaus (20) und der Ladekante (46) etwa dem Abstand zwischen der Ladekante (46) und der Fahrbahn (28) entspricht.

14. Verfahren nach Anspruch 12 oder 13,
- **dadurch gekennzeichnet, dass**
- das Plateau (20) in einer geneigten Position in den geschlossenen Kofferaufbau (14) des Fahrzeugs (10) eingefahren wird,
- das Plateau (20) nach oder während Verfahrensschritt e) in eine etwa waagrechte Position gebracht wird.

15. Verfahren nach Anspruch 12 oder 13,
- **dadurch gekennzeichnet, dass**
- das hintere Ende (88) des Plateaus (20.4) nach oder während Verfahrensschritt d) durch eine weitere senkrechte Hubbewegung so weit angehoben wird, dass das Plateau (20.4) etwa waagrecht angeordnet ist,
- das Plateau (20.4) in dieser waagrechten Position in den geschlossenen Kofferaufbau (14.4) des Fahrzeugs (10.4) eingefahren wird.

16. Verfahren nach einem der Ansprüche 12 bis 15,
- **dadurch gekennzeichnet, dass**
- nach Verfahrensschritt c) ein auf dem ersten Plateau (20.4) befindliches zweites Plateau (80) angehoben wird,
- ein zweiter zu verladender PKW (12') auf das erste Plateau (20.4) aufgefahren wird,
- beide Plateaus (20.4, 80) gemeinsam in den geschlossenen Kofferaufbau (14.4) des Fahrzeugs (10.4) eingefahren werden.

17. Verfahren nach Anspruch 16,
- **dadurch gekennzeichnet, dass**
- zunächst das vordere Ende (82) des zweiten Plateaus (80) durch eine senkrechte Hubbewegung angehoben wird,
- anschließend das hintere Ende (88) des zweiten Plateaus (80) durch eine weitere Hubbewegung angehoben wird.

## Claims

1. Vehicle (10, 10.4) for transporting at least one passenger car (12, 12'),
- with a closed box body (14, 14.4),
- with a platform (20, 20.4),
- wherein the platform (20, 20.4) in its transporting position is within the box body (14, 14.4),
- wherein the platform (20, 20.4) can be brought out of this transporting position into a loading position, in which the rear end (26, 26.4) of the platform (20, 20.4) rests on the roadway (28) and the front end (30) of the platform (20, 20.4) is secured in the region of the rear loading opening (44, 44.4) of the box body (14, 14.4),
- wherein there is at least one lifting element (32), by which the front end (30) of the platform (20, 20.4) in its loading position can be lowered approximately vertically so that also the front end (30) of the platform (20, 20.4) rests on the roadway (28),
- **characterized in that**
- the at least one lifting element (32) is formed as a lifting cylinder and is secured on a supporting device (40),
- the supporting device (40) is mounted longitudinally displaceably within the box body (14, 14.4),
- the front end (30) of the platform (20, 20.4) can be pushed in and out of the box body by the supporting device.

2. Vehicle according to Claim 1,
- **characterized in that**
- the rear end (26, 26.4) of the platform (20, 20.4) is equipped with running rollers (22).

3. Vehicle according to Claim 1 or 2,
- **characterized in that**
- the supporting device (40) is equipped with at least one gear wheel,
- the supporting device (40) is mounted with this gear wheel longitudinally displaceably on at least one toothed rack (42),
- the toothed rack (42) is arranged in the longitudinal direction of the box body (14, 14.4).

4. Vehicle according to one of the preceding claims,
- **characterized in that**
- the front end (30) of the platform (20) can be raised by the lifting element (32) beyond the loading edge (46).

5. Vehicle according to one of the preceding claims,
- **characterized in that**
- there is a further lifting element (90), which is arranged in the region of the rear end (26.4) of the platform (20.4),
- the rear end (26.4) of the platform (20.4) can be raised by the further lifting element (90).

6. Vehicle according to Claim 5,
- **characterized in that**
- the further lifting element (90) is equipped with running rollers (22).

7. Vehicle according to Claim 5 or 6,
- **characterized in that**
- the further lifting element can be releasably fastened to the rear region of the platform.

8. Vehicle according to one of Claims 5 to 7,
- **characterized in that**
- the further lifting element is arranged pivotably on the rear end of the platform.

9. Vehicle according to one of the preceding claims,
- **characterized in that**
- there is a first platform (20.4),
- the rear end (26.4) and the front end (30) of the first platform (20.4) in the loading position rest on the roadway (28),
- there is a second platform (80),
- the second platform (80) in the loading position is parallel to the first platform (20.4) and rests on it,
- there is at least one further lifting element (86), by which the rear end (88) of the second platform (80) can be raised.

10. Vehicle according to Claim 9,
- **characterized in that**
- there is at least one further lifting element (84), by which the front end (82) of the second platform (80) can be raised.

11. Vehicle according to one of the preceding claims,
- **characterized in that**
- the closed box body is designed such that it can be cooled and/or can be heated.

12. Method for loading a passenger car (12, 12') in a vehicle (10, 10.4) comprising the following method steps
a) a platform (20, 20.4) is extended out of the closed box body (14, 14.4) of the vehicle (10, 10.4), so that the platform (20, 20.4) rests with its rear end (26, 26.4) on the roadway (28) and forms an inclined ramp,
b) the front end (30) of the platform (20, 20.4) is lowered by a vertical downward movement such that also this end (30) of the platform (20, 20.4) rests on the roadway (28),
c) the passenger car (12, 12') to be loaded is driven onto the platform (20, 20.4),
d) the front end (30) of the platform (20, 20.4) is raised by a vertical upward movement to the extent that it is level with the loading edge (46),
e) the platform (20, 20.4) is retracted into the closed box body (14, 14.4) of the vehicle (10, 10.4),
- **characterized in that**
- the platform (20, 20.4) is extended out of and retracted into the closed box body (14, 14.4) by means of a supporting device (40) mounted longitudinally displaceably in the closed box body (14, 14.4).

13. Method according to Claim 12,
- **characterized in that**
- after method step d), the front end (30) of the platform (20) is raised by a further vertical upward movement to the extent that the distance (50) between the front end (30) of the platform (20) and the loading edge (46) corresponds approximately to the distance between the loading edge (46) and the roadway (28).

14. Method according to Claim 12 or 13,
- **characterized in that**
- the platform (20) in an inclined position is retracted into the closed box body (14) of the vehicle (10),
- after or during method step e), the platform (20) is brought into an approximately horizontal position.

15. Method according to Claim 12 or 13,
- **characterized in that**
- after or during method step d), the rear end (88) of the platform (20.4) is raised by a further vertical upward movement to the extent that the platform (20.4) is arranged approximately horizontally,
- the platform (20.4) in this horizontal position is retracted into the closed box body (14.4) of the vehicle (10.4).

16. Method according to one of Claims 12 to 15,
- **characterized in that**
- after method step c), a second platform (80) located on the first platform (20.4) is raised,
- a second passenger car (12') to be loaded is driven onto the first platform (20.4),
- the two platforms (20.4, 80) are together retracted into the closed box body (14.4) of the vehicle (10.4).

17. Method according to Claim 16,
- **characterized in that**
- firstly, the front end (82) of the second platform (80) is raised by a vertical upward movement,
- subsequently, the rear end (88) of the second platform (80) is raised by a further upward movement.

## Revendications

1. Véhicule (10, 10.4) pour le transport d'au moins une voiture automobile (12, 12'),
- avec une structure de fourgon fermée (14, 14.4),
- avec un plateau (20, 20.4),
- dans lequel le plateau (20, 20.4) dans sa position de transport est présent à l'intérieur de la structure de fourgon (14, 14.4),
- dans lequel le plateau (20, 20.4) peut être amené de cette position de transport à une position de chargement, dans laquelle l'extrémité arrière (26, 26.4) du plateau (20, 20.4) repose sur la chaussée (28) et l'extrémité avant (30) du plateau (20, 20.4) est fixée dans la région de l'ouverture de chargement arrière (44, 44.4) de la structure de fourgon (14, 14.4),
- dans lequel il se trouve au moins un élément de levage (32), par lequel l'extrémité avant (30) du plateau (20, 20.4) peut être abaissée environ verticalement dans sa position de chargement, de telle manière que l'extrémité avant (30) du plateau (20, 20.4) repose également sur la chaussée (28), **caractérisé en ce que**
- ledit au moins un élément de levage (32) est formé par un vérin de levage et est fixé à un dispositif de support (40),
- le dispositif de support (40) est monté de façon déplaçable longitudinalement à l'intérieur de la structure de fourgon (14, 14.4),
- l'extrémité avant (30) du plateau (20, 20.4) peut être déplacée vers l'intérieur de la structure de fourgon et hors de celle-ci au moyen du dispositif de support.

2. Véhicule selon la revendication 1, **caractérisé en ce que** l'extrémité arrière (26, 26.4) du plateau (20, 20.4) est équipée de galets de roulement (22).

3. Véhicule selon une revendication 1 ou 2, **caractérisé en ce que**
- le dispositif de support (40) est équipé d'au moins une roue dentée,
- le dispositif de support (40) est monté de façon déplaçable longitudinalement avec cette roue dentée sur une crémaillère (42),
- la crémaillère (42) est disposée dans la direction longitudinale de la structure de fourgon (14, 14.4).

4. Véhicule selon l'une quelconque des revendications précédentes, **caractérisé en ce que** l'extrémité avant (30) du plateau (20) peut être soulevée au moyen de l'élément de levage (32) par-dessus l'arête de chargement (46).

5. Véhicule selon l'une quelconque des revendications précédentes, **caractérisé en ce que**
- il se trouve un autre élément de levage (90), qui est disposé dans la région de l'extrémité arrière (26.4) du plateau (20.4),
- l'extrémité arrière (26.4) du plateau (20.4) peut être soulevée par l'autre élément de levage (90).

6. Véhicule selon la revendication 5, **caractérisé en ce que** l'autre élément de levage (90) est équipé de galets de roulement (22).

7. Véhicule selon une revendication 5 ou 6, **caractérisé en ce que** l'autre élément de levage peut être fixé de façon amovible à la région arrière du plateau.

8. Véhicule selon l'une quelconque des revendications 5 à 7, **caractérisé en ce que** l'autre élément de levage est disposé de façon pivotante à l'extrémité arrière du plateau.

9. Véhicule selon l'une quelconque des revendications précédentes, **caractérisé en ce que**
- il se trouve un premier plateau (20.4),
- l'extrémité arrière (26.4) et l'extrémité avant (30) du premier plateau (20.4) reposent sur la chaussée (28) dans la position de chargement,
- il se trouve un second plateau (80),
- le second plateau (80) est parallèle au premier plateau (20.4) dans la position de chargement et repose sur celui-ci,
- il se trouve au moins un autre élément de levage (86), au moyen duquel l'extrémité arrière (88) du second plateau (80) peut être soulevée.

10. Véhicule selon la revendication 9, **caractérisé en ce qu'**il se trouve au moins un autre élément de levage (84), au moyen duquel l'extrémité avant (82) du second plateau (80) peut être soulevée.

11. Véhicule selon l'une quelconque des revendications précédentes, **caractérisé en ce que** la structure de fourgon fermée peut être réfrigérée et/ou chauffée.

12. Procédé de chargement d'une voiture automobile (12, 12') dans un véhicule (10, 10.4), comprenant les étapes suivantes:
a) on fait sortir un plateau (20, 20.4) hors de la structure de fourgon fermée (14, 14.4) du véhicule (10, 10.4), de telle manière que le plateau (20, 20.4) repose par son extrémité arrière (26, 26.4) sur la chaussée (28) et forme une rampe inclinée,
b) on abaisse l'extrémité avant (30) du plateau (20, 20.4) au moyen d'un mouvement de course verticale, de telle manière que cette extrémité (30) du plateau (20, 20.4) repose également sur la chaussée (28),
c) on fait monter la voiture automobile à charger (12, 12') sur le plateau (20, 20.4),
d) on soulève l'extrémité avant (30) du plateau (20, 20.4) au moyen d'un mouvement de course verticale, jusqu'à ce qu'elle se trouve à hauteur de l'arête de chargement (46),
e) on fait rentrer le plateau (20, 20.4) dans la structure de fourgon fermée (14, 14.4) du véhicule (10, 10.4),
**caractérisé en ce que** l'on fait rentrer le plateau (20, 20.4) dans la structure de fourgon fermée (14, 14.4) et on le fait sortir de celle-ci, au moyen d'un dispositif de support (40) monté de façon déplaçable longitudinalement dans la structure de fourgon fermée (14, 14.4).

13. Procédé selon la revendication 12, **caractérisé en ce que**, après l'étape d), on soulève l'extrémité avant (30) du plateau (20) par un autre mouvement de course verticale, jusqu'à ce que la distance (50) entre l'extrémité avant (30) du plateau (20) et l'arête de chargement (46) corresponde sensiblement à la distance entre l'arête de chargement (46) et la chaussée (28).

14. Procédé selon une revendication 12 ou 13, **caractérisé en ce que**
- on fait rentrer le plateau (20) dans une position inclinée dans la structure de fourgon fermée (14) du véhicule (10),
- on amène le plateau (20) dans une position sensiblement horizontale après ou pendant l'étape e).

15. Procédé selon une revendication 12 ou 13, **caractérisé en ce que**
- on soulève l'extrémité arrière (88) du plateau (20.4) après ou pendant l'étape d) au moyen d'un autre mouvement de course verticale jusqu'à ce que le plateau (20.4) soit disposé sensiblement horizontalement,
- on fait rentrer le plateau (20.4) dans cette position horizontale dans la structure de fourgon fermée (14.4) du véhicule (10.4).

16. Procédé selon l'une quelconque des revendications 12 à 15, **caractérisé en ce que**
- après l'étape c), on soulève un second plateau (80) se trouvant sur le premier plateau (20.4),
- on fait monter une seconde voiture automobile à charger (12') sur le premier plateau (20.4),
- on fait rentrer les deux plateaux (20.4, 80) ensemble dans la structure de fourgon fermée (14.4) du véhicule (10.4).

17. Procédé selon la revendication 16, **caractérisé en ce que**
- on soulève d'abord l'extrémité avant (82) du second plateau (80) au moyen d'un mouvement de course verticale,
- on soulève ensuite l'extrémité arrière (88) du second plateau (80) au moyen d'un autre mouvement de course verticale.
